# EUROPEAN PATENT SPECIFICATION

(11) **EP 0 272 328 B1**
(45) Date of publication and mention of the grant of the patent: **03.03.1993**
(21) Application number: 87903417.1
(22) Date of filing: 20.05.1987
(51) Int. Cl.: F16D 13/64

(54) **STRUCTURE FOR SUPPRESSING VIBRATION OF CLUTCH DISC**
ANORDNUNG ZUR UNTERDRÜCKUNG VON SCHWINGUNGEN EINER KUPPLUNGSSCHEIBE
STRUCTURE POUR SUPPRIMER LES VIBRATIONS D'UN DISQUE D'EMBRAYAGE

(30) Priority: 26.05.1986 JP 120798/86; 26.05.1986 JP 79332/86 U
(43) Date of publication of application: 29.06.1988
(73) Proprietor: KABUSHIKI KAISHA DAIKIN SEISAKUSHO, Neyagawa-shi Osaka 572 (JP)
(72) Inventor: OHGA, Syogo, Abeno-ku, Osaka-shi Osaka 545 (JP)
(74) Representative: Flügel, Otto, Dipl.-Ing.
(86) International application number: JP8700323
(87) International publication number: WO8707345

(56) References cited:
- JP-B- 327 255
- JP-Y- 4 738 695
- JP-Y- 5 224 691
- US-A- 4 278 162

## Description

### Technical Field

This invention relates to a damping mechanism of clutch disc suitable mainly for an automobile clutch.

### Background Art

Generally, a clutch disc is so constructed that a friction facing secured to a cushioning plate provided at an outer periphery of the clutch disc is disposed between an engine-side flywheel and a pressure plate interlocked to a clutch pedal. Further, it is so constructed that a torque from the flywheel side is transmitted through the clutch disc to a central output shaft when the friction facing is sandwiched by and between the flywheel and the pressure plate.

The engine-side torque is transmitted to the clutch, but on the other hand various vibrations of the engine-side are also transmitted thereto. These vibrations are transmitted also to the pressure plate through the friction facing etc. simultaneously. These vibration will cause resonance of the cushioning plate or pressure plate so that a resonance sound is apt to be emitted therefrom in a half-engaged state of clutch at the time of starting a vehicle.

The US-A-4278162 discloses a friction disc comprising a member of friction button assemblies, each of which including a planar steel core and a planar pad of friction material, i.e. a friction facing.

Each of the steel cores comprises a stabilizer strap of finger, which is integrally formed with the main part of the steel core and is provided with a hole. A rivet inserted in the hole joins the steel core to adjacent marcel springs. The entirety of all friction button assemblies and marcels springs forms a friction disc which is elastic in the axial direction and thereby provide this move gauge mount function of the clutch.

The clutch disc according to the cited reference US-A-4278162 discloses no means, however, to damp vibractions in the axial direction of the clutch.

Similarly the JP-Y1-4738695 gives now hint to solve the problem of axial vibration of during.

An object of this invention is to solve the problem of "resonance sound" emitted especially in the so-called half-engaged state during engaging the clutch due to resonance of the cushioning plate or pressure plate.

### Disclosure of the Invention

In a clutch disc including a first part flush with a fastening portion to the clutch plate or deviating to a flywheel side and a second part proturberating from the first part to a pressure plate side, both being provided on a cushioning plate interconnecting an output-side disc-like clutch plate with its outer peripheral side input facing, and a friction facing secured to the flywheel side of the first part and the pressure plate side of the second part; a damping mechanism for the clutch disc having a damping member for damping vibrations in an axial direction of the cushioning plate being installed between the cushioning plate and the clutch plate.

A torque inputted from the engine-side flywheel to the friction facing is transmitted through the cushioning plate to the output-side clutch plate. On the other hand, axial vibrations generated from various resources are also transmitted from the flywheel side to the friction facing. These vibrations are transmitted to the cushioning plate too, however, a resonance of the cushioning plate is damped by the damping member so that generation of so-called "resonance sound" emitted during a half-engaged state can be controlled.

### Brief Description of the Drawings

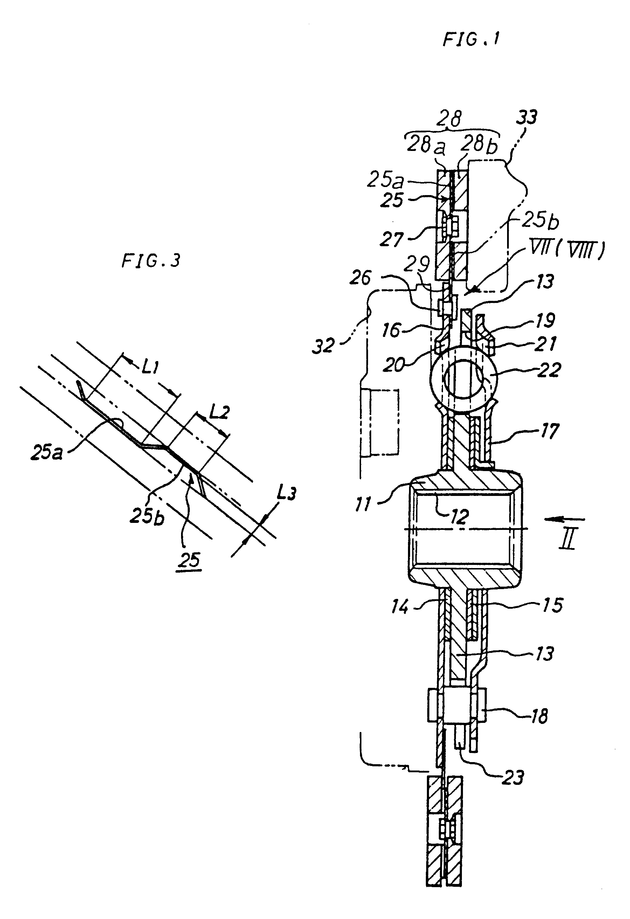

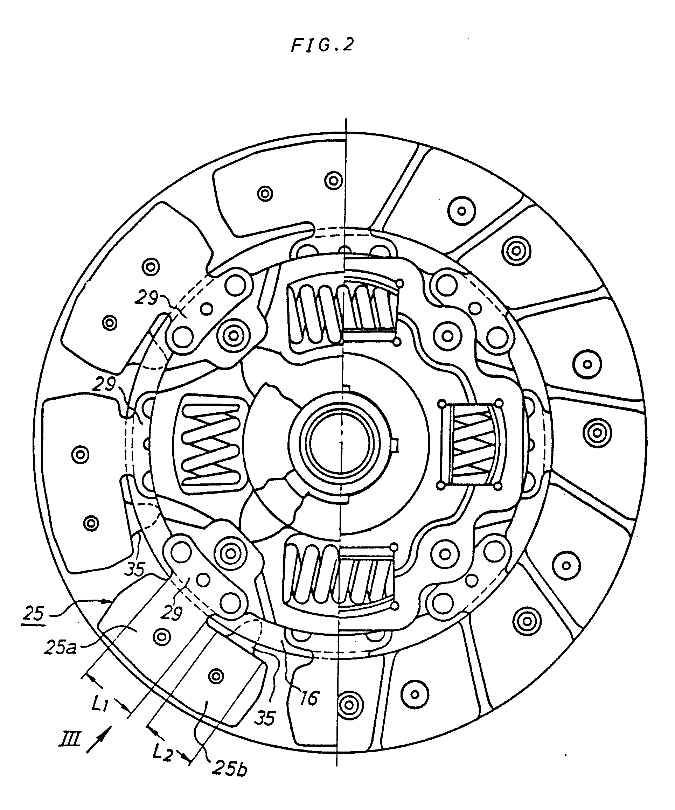

Fig. 1 is a vertical sectional view of a clutch disc employing a damping mechanism according to the invention. Fig. 2 is a partially fragmental front view viewed in a direction of arrow II of Fig. 1. Fig. 3 is a schematic view viewed in a direction of arrow III of Fig. 2.

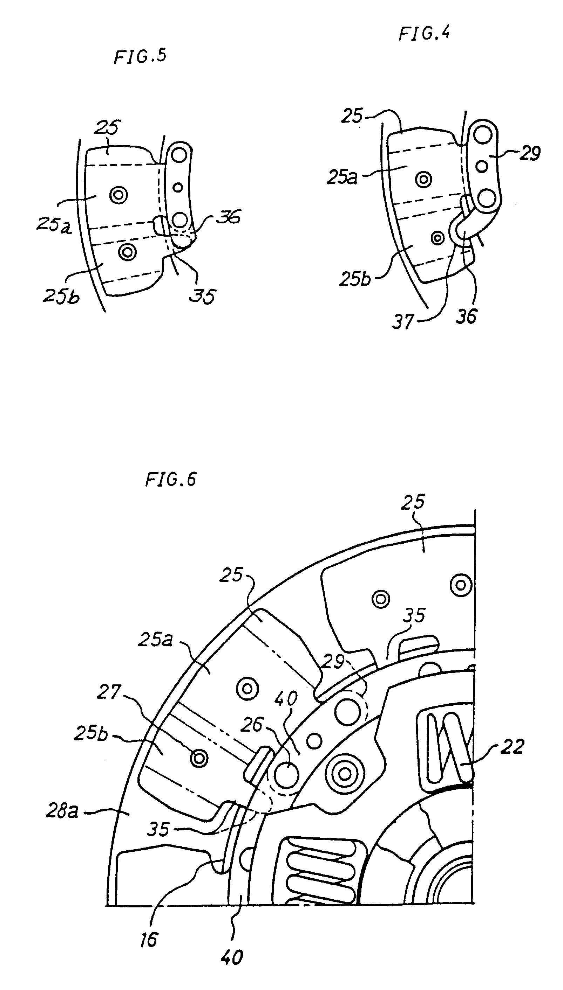

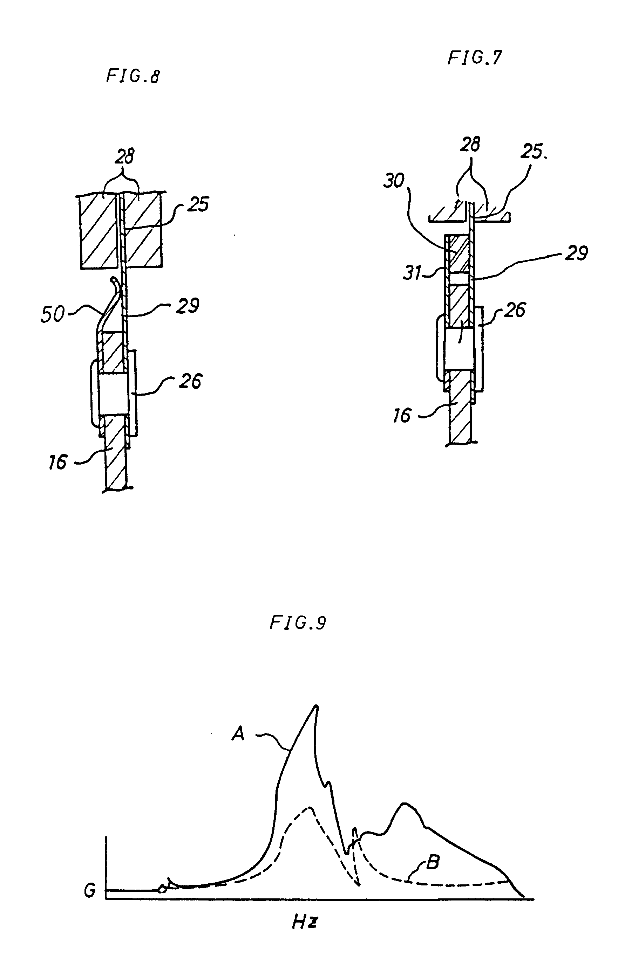

Fig. 4, Fig. 5 & Fig. 6, are views corresponding to respective parts of Fig. 2 for illustrating different embodiments. Fig. 7 and Fig. 8 are enlarged vertical sectional views corresponding to VII (& VIII) parts of Fig. 1 for illustrating further another embodiments. Fig. 9 is a graph showing a relation between frequency and acceleration.

### Mode for Carrying Out the Invention

The invention will be described in details hereunder with reference to the attached drawings.

In Fig. 1, a spline hub 11 includes on its inner peripheral surface a spline 12 fitting onto an output shaft (not shown) and integrally has on its outer periphery a disc-like flange 13. Annular friction members 14 & 15 are disposed on both sides inner peripheral portions of the flange 13 and a pair of disc-like clutch plate 16 and a retaining plate 17 are disposed on both sides of the flange 13 in such a manner as sandwiching the friction members 14 & 15.

Plural window holes 19, 20 & 21 (each one being shown) are provided on places near to outer peripheries of the flange 13 and the both plates with intervals left therebetween in a circumferential direction of clutch. A torsion spring 22 is fitted in each set of three window holes 19, 20 & 21 in such a manner as extending in the circumferential direction of clutch. Further, outer peripheral portions of the clutch plate 16 and the retaining plate 17 are integrally connected together by a stop pin 18 which is parallel to a clutch center axis. The stop pin 18 is engaged with a notch 23 formed at an outer peripheral part of the flange 13 with plays left therebetween in the circumferential direction of clutch.

An inner peripheral fastening part 29 of a cushioning plate 25 is secured by a rivet 26 to a flange 13 side face of an outer peripheral part of the clutch plate 16. A plurality of the cushioning plates 25 is disposed on the clutch plate with equal intervals left therebetween. Each of the cushioning plate 25 has a first part 25a (this part can be deviated to a flywheel 32 side) extending on a plane approximately flush with the clutch plate 16 and a second part 25b proturberating from the first part 25a to a pressure plate 33 side. A facing 28a is fastened by a rivet 27 to a flywheel 32 side of the first part 25a, and a facing 28b is fastened by the rivet 27 to a pressure plate 33 side of the second part 25b in the same way. Since the cushioning plate 25 has the first part 25a and the second part 25b to be formed into an approximately wavy shape, the cushioning plate 25 can provide a spring action when the both sides facings 28a & 28b are compressed close to each other.

Circumferential widths of the first part 25a and the second part 25b of the cushioning plate 25 are L1 and L2 respectively, and an axial deviation between the both parts is L3 as illustrated in Fig. 3.

In Fig. 2, a projection 35 protrudes integrally from the second part 25b of the cushioning plate 25 toward a clutch disc center. This projection 35 presses on an outer peripheral part of a back side of the clutch plate, i.e. an opposite side (back side of Fig. 2) of a face on which the cushioning plate fastening part 29 contacts against the clutch plate, thereby applying an elastic force to decrease the proturberance of the second part 25 which proturberates to the pressure plate side. Namely, a damping effect is brought about to the pressure plate side facing 28b which is apt to vibrate in the axial direction together with the pressure plate under the half-engaged state, so that a resonance phenomenon caused by the proturberating second part 25b can be restricted even though the axial deviation L3 is provided in the cushioning plate 25.

Incidentally, the pressure plate 33 of Fig. 1 is connected through a strap (not shown) extending in the clutch circumferential direction to a clutch cover (not shown) fastened to the flywheel 32 so that it is supported in such a manner as rocking freely in the direction of clutch center axis. Further, a spring force generated by a diaphragm spring (not shown) acts on the pressure plate 33 to usually press the facing 28 on the flywheel 32. However, the pressure plate 33 can be relieved from the facing 28 to disengage the clutch by bending the diaphragm spring backward through means of a release lever interlocked to a clutch pedal.

In embodiments 4 & 5, a tip end of a presser plate 36 tightened together with the cushioning plate fastening part 29 presses on a pressure plate side face of the second part 25 proturberating to the pressure plate side in a direction to decrease the proturberance.

Namely, 37 of Fig. 4 is a notch provided on the facing 28b in order for revealing the second part 25b on which the presser plate 36 presses. From the necessity to have the presser plate 36 contact with the second part 25b, a friction area of the pressure plate side facing 28b will decrease by an area corresponding to the notch in this case.

Further, the presser plate 36 of Fig. 5 presses on the projection 35 of the second part 25b in a direction to minimize the proturberance.

An embodiment of Fig. 6 is an example employing a ring-like presser plate 40 in stead of the presser plate as illustrated in Figs. 4 & 5.

In an embodiment of Fig. 7, a rubber damping member 30 contacts with a face opposite to the flange within an area of the fastening part 29 of the cushioning plate 25 at peripherally external side of the clutch plate 16 and internal side of the flange 28. A contact pressure of this case is as small as about 1 kg/cm², for example. A side face of the damping member 30 opposite to the fastening part 29 is bonded to a clutch outer peripheral side face of a hold metal 31. An inner peripheral part of the hold metal 31 is fastened to the clutch plate 16 by the rivet 26 which fastens the fastening part 29, thereby the damping member 30 being held in a slightly compressed state between the fastening part 29 and the hold metal 31.

In an embodiment of Fig. 8, a plate-like damping member 50 contacts with a face opposite to the flange within an area of the fastening part 29 of the cushioning plate 25 at peripherally external side of the clutch plate 16 and internal side of the flange 25. An inner peripheral part of the damping member 50 is secured to the clutch plate 16 by the rivet 26 which fastens the fastening part 29. The damping member 50 is formed into an approximately S-shape as it leaves the rivet 26 to the clutch outer periphery. A contact pressure of the damping member 50 made of a weak spring steel is as small as about 1 kg/cm², for example.

Function will be described hereunder. In Fig. 1, when the pressure plate 33 presses the facing 28 on the flywheel 32, a torque from the flywheel 32 is transmitted through the facing 28, the cushioning plate 25, the clutch plate 16, the torsion spring 22, the flange 13 and the spline hub 11 to the not-shown output shaft. In this case, a torsion is produced between the both plates 16 & 17 and the flange 13 corresponding to the transmitted torque so that slippages are generated on surfaces of the friction members 14 & 15. The slippage produces a hystersis torque which absorbs a torque fluctuation. On the other hand, vibrations originated from various causes occur in the flywheel 32. These vibrations are transmitted to the facing 28 and further also to the pressure plate 33 mainly through the facing 28. In the structures as illustrated in Fig. 1 through Fig. 3, the projection 35 of the second part 25b of the cushioning plate 25 proturberating to the pressure plate side presses on the back side of the clutch plate 16 to apply a force in a direction to decrease the proturberance, so that vibrations of the pressure plate 33 etc. based on the deviation L3 can be controlled at the time of half-engaged state when the axial deviation L3 is not completely flattened. Thereby, the "resonance sound" at time of starting a vehicle can be avoided without fail.

Further, when the structure of Fig. 4, Fig. 5 or Fig. 6 is employed, the presser plates 36 & 40 press on the second part 25b in the direction to decrease the proturberance so that the same effect may be obtainable, the vibrations of the facing 28 and the pressure plate 33 can be controlled, and the "resonance sound" of clutch can be minimized.

Moreover, when the structure of Fig. 7 or Fig. 8 is employed, the resonance of the cushioning plate 25 can be controlled to decrease the "resonance sound" of clutch.

Fig. 9 shows the results of vibration test. In Fig. 9, the axis of abscissa represents a clutch axial frequency Hz applied on the flywheel 32 and the axis of ordinote represents an acceleration G of the pressure plate 33 generated in resonance with the axis of abscissa. As obvious from Fig. 9, the acceleration of the pressure plate 33 is particularly decreased in the characteristic B obtained from the structures of Fig. 1 through Fig. 3 as compared with the characteristic A obtained from the conventional structure. Thus, the "resonance sound" of clutch can be minimized.

### Industrial Applicability

As described above, the damping mechanism of clutch disc according to the present invention is very useful especially when employed in clutches for use in various automobiles.

## Claims

1. Clutch disc, especially for a dry automotive clutch, designed to be nipped between a flywheel (32) and a pressure plate (33); comprising a cushioning plate (25), the latter consisting of elements (25) being fastened to a disc-like clutch plate (16) and comprising a first part (25a) flush with a fastening part (29) to the clutch plate (16) and deviating to the flywheel side and a second part (25b) proturberating from the first part (25a) to the pressure plate side, both parts wearing friction facings (28a, 28b) characterized by a damping mechanism for the clutch having a damping member (30, 35, 36 or 50) for damping vibrations in an axial direction of the cushioning plate (25).

2. Clutch disc as set forth in claim 1, characterized in that a damping member (35 or 36) presses on the proturberating second part (25b) of the cushioning plate (25) and depresses it.

3. Clutch disc as set forth in claim 2, characterized in that projection (35) projecting form the proturberating second part (25b) toward a clutch disc center axis is provided, the projection (35) being engaged with the clutch plate (16) so as to depress to proturberating second part (25b).

4. Clutch disc as set forth in claim 2, characterized in that a tip end of the pressure plate (36) secured together with the cushioning plate fastening part (29) is contacted against the proturberating part (25b) so as to depress the proturberating second part (25b).

5. Clutch disc as set forth in claim 2, characterized in that projection (35) projecting from the proturberating second part (25b) toward a clutch disc center axis is provided, and a tip end of the pressure plate (36) secured together with the cushioning plate fastening part (29) is contacted against the projection (35) so as to depress the proturberating second part (25b).

6. Clutch disc as set forth in claim 1, characterized in that a damping member (30 or 50) is contacted against the cushioning plate fastening part (29) within an area peripherally external from the clutch plate (16) and internal from the facing (28), and a base portion of said damping member (30 or 50) is secured to the clutch plate (16).

7. Clutch disc as set forth in claim 6, characterized in that a rubber member (30) serving as the damping member is bonded to a hold metal (31), and said hold metal (31) is secured to the clutch plate (16).

8. Clutch disc as set forth in claim 6, characterized in that a plate-like member (50) formed into an S-shape and serving as the damping member is secured to the clutch plate (16).

## Patentansprüche

1. Kupplungsscheibe, insbesondere für Trockenkupplungen von Kraftfahrzeugen, die ausgelegt ist für die klemmende Aufnahme zwischen einem Schwungrad (32) und einer Andrückplatte (33), mit einer Pufferplatte (25), die aus an einer Scheibenähnlichen Kupplungsplatte (16) festzulegenden Elementen (25) besteht und einen mit einem Befestigungsteil (29) zur Kupplungsplatte (16) hin fluchtenden und zur Schwungradseite hin abweichenden ersten Teil (25a) und einen von dem ersten Teil (25a) hin zur Andrückplattenseite abführenden zweiten Teil (25b) aufweist, wobei beide Teile mit Reibbelägen (28a,28b) versehen sind, gekennzeichnet durch einen Dämpfungsmechanismus für die Kupplung, mit einem Dämpfungselement (30,35,36 oder 50) zur Dämpfung von Schwingungen in einer axialen Richtung der Pufferplatte (25).

2. Kupplungsscheibe nach Anspruch 1, dadurch gekennzeichnet daß ein Dämpfungselement (35 oder 36) an den überstehenden zweiten Teil (25b) der Pufferplatte (25) drückt und ihn niederdrückt

3. Kupplungsscheibe nach Anspruch 2, dadurch gekennzeichnet, daß ein von dem überstehenden zweiten Teil (25b) in Richtung auf die Mittelachse der Kupplungsscheibe abführender Vorsprung (35) vorgesehen ist, der mit der Kupplungsplatte (16) derart in Verbindung steht, daß der überstehende zweite Teil (25b) niedergedrückt wird.

4. Kupplungsscheibe nach Anspruch 2, dadurch gekennzeichnet, daß ein mit dem Kupplungsplatten-Befestigungsteil (29) verbundenes bzw. verschraubtes vorderes Ende der Andrückplatte (36) mit dem überstehenden Teil (25b) derart in Kontakt gebracht ist, daß der überstehende zweite Teil (25b) niedergedrückt wird.

5. Kupplungsscheibe nach Anspruch 2, dadurch gekennzeichnet, daß der von dem überstehenden zweiten Teil (25b) in Richtung auf die Mittelachse der Kupplung abführende Vorsprung (35) vorgesehen ist und daß ein mit dem Pufferplatten-Befestigungsteil (29) befestigtes bzw. verschraubtes vorderes Ende der Andrückplatte (36) mit dem Vorsprung (35) derart in Kontakt gebracht ist, daß der überstehende zweite Teil (25b) niedergedrückt wird.

6. Kupplungsscheibe nach Anspruch 1, dadurch gekennzeichnet, daß ein Dämpfungselement (30 oder 50) mit dem Pufferplatten-Befestigungsteil (29) innerhalb eines Bereichs periphär außerhalb der Kupplungsplatte (16) und innerhalb des Belags (28) in Kontakt gebracht ist und daß ein Basisbereich des Dämpfungselements (30 oder 50) an der Kupplungsplatte (16) festgelegt ist.

7. Kupplungsscheibe nach Anspruch 6, dadurch gekennzeichnet, daß ein als Dämpfungselement dienendes Gummielement (50) an ein Haltemetall (31) geklebt und das Haltemetall (31) an der Kupplungsplatte (16) festgeiegt ist.

8. Kupplungsscheibe nach Anspruch 6, dadurch gekennzeichnet, daß ein plattenähnliches Element (50) in S-Form gebracht und, als Dämpfungselement dienend, an der Kupplungsplatte (16) festgelegt ist.

## Revendications

1. Disque d'embrayage conçu en particulier pour un embrayage à sec d'automobile, destiné à être pincé entre un volant (32) et une plaque de pression (33) ; ce disque d'embrayage comprenant une plaque d'amortissement (25), cette dernière étant constituée d'éléments (25) fixés à une plaque d'embrayage en forme de disque (16) et comprenant une première partie (25a) arrivant à ras d'une partie de fixation (29) à la plaque d'embrayage (16) et s'écartant du côté du volant, et une seconde partie (25b) faisant saillie sur la première partie (25a) du côté de la plaque de pression, ces deux parties portant des garnitures de friction (28a, 28b), disque d'embrayage caractérisé en ce qu'il comprend un mécanisme d'amortissement de l'embrayage comportant un élément d'amortissement (30, 35, 36 ou 50) destiné à amortir les vibrations dans la direction axiale de la plaque d'amortissement (25).

2. Disque d'embrayage selon la revendication 1, caractérisé en ce qu'un élément d'amortissement (35 ou 36) appuie sur la seconde partie de protubérance (25b) de la plaque d'amortissement (25) et relâche celle-ci.

3. Disque d'embrayage selon la revendication 2, caractérisé en ce qu'on utilise un élément (35) faisant saillie sur la seconde partie de protubérance (25b) en direction de l'axe central du disque d'embrayage, et en ce que l'élément en saillie (35) vient en contact avec la plaque d'embrayage (16) de manière à appuyer sur la seconde partie de protubérance (25b).

4. Disque d'embrayage selon la revendication 2, caractérisé en ce qu'un bout d'extrémité de la plaque de pression (36) fixée à la partie de fixation (29) de la plaque d'amortissement, vient en contact avec la partie de protubérance (25b) de manière à appuyer sur cette seconde partie de protubérance (25b).

5. Disque d'embrayage selon la revendication 2, caractérisé en ce qu'on utilise un élément (35) faisant saillie sur la seconde partie de protubérance (25b) en direction de l'axe central du disque d'embrayage, et en ce qu'un bout d'extrémité de la plaque de pression (36) fixée à la partie de fixation (29) de la plaque d'amortissement, vient en contact avec l'élément en saillie (35) de manière à appuyer sur la seconde partie de protubérance (25b).

6. Disque d'embrayage selon la revendication 1, caractérisé en ce qu'un élément d'amortissement (30 ou 50) vient en contact avec la partie de fixation (29) de la plaque d'amortissement à l'intérieur d'une zone située périphériquement à l'extérieur de la plaque d'embrayage (16) et à l'intérieur de la garniture (28), et en ce qu'une partie de base de l'élément d'amortissement (30 ou 50) est fixée à la plaque d'embrayage (16).

7. Disque d'embrayage selon la revendication 6, caractérisé en ce qu'un élément de caoutchouc (30) servant d'élément d'amortissement est collé à une plaque métallique de maintien (31), et en ce que cette plaque métallique de maintien (31) est fixée à la plaque d'embrayage (16).

8. Disque d'embrayage selon la revendication 6, caractérisé en ce qu'un élément en forme de plaque (50) réalisé sous la forme d'un S et servant d'élément d'amortissement, est fixé à la plaque d'embrayage (16).
